# EUROPEAN PATENT SPECIFICATION

(11) **EP 1 622 150 B1**
(45) Date of publication and mention of the grant of the patent: **05.11.2008**
(21) Application number: 05016330.2
(22) Date of filing: 27.07.2005
(51) Int. Cl.: G11B 27/34, G11B 7/007, G11B 20/10, G11B 7/22

(54) **Evaluation disc**
Bewertungsplatte
Disque d'évaluation

(30) Priority: 27.07.2004 JP 2004218107
(43) Date of publication of application: 01.02.2006
(73) Proprietor: Funai Electric Co., Ltd., Daito-shi, Osaka (JP)
(72) Inventor: Sogawa, Teruaki, Daito-shi, Osaka (JP); Yoshioka, Joji, Daito-shi, Osaka (JP); Inoue, Katsuichi, Daito-shi, Osaka (JP)
(74) Representative: Grünecker, Kinkeldey, Stockmair & Schwanhäusser Anwaltssozietät

(56) References cited:
- EP-A- 1 160 775
- US-A1- 5 740 151
- US-A1- 2003 117 911
- PATENT ABSTRACTS OF JAPAN vol. 014, no. 484 (P-1120), 22 October 1990 (1990-10-22) -& JP 02 195542 A (FUJITSU TEN LTD), 2 August 1990 (1990-08-02)

## Description

### BACKGROUND OF THE INVENTION

### 1. Field of the Invention

The present invention relates to an evaluation disc for use in regulating and evaluating an optical disc device operable of performing recording/reproducing operation for both a CD standard optical disc and a DVD standard optical disc.

### 2. Description of the Related Art

An optical disc device (multi-purpose optical disc device) operable of performing recording/reproducing operation for both a CD standard optical disc and a DVD standard optical disc has been used popularly. It is well known that, although a CD and a DVD have the same outer configuration (diameter of 12 cm and thickness of 1.2 mm), standards of information to be recorded (recording information) for the CD and the DVD are different in, such as thickness to a recording layer, reflectivity at the recording layer and physical amount of recording bits, etc. Therefore, in fabricating the multi-purpose optical disc device, tests for confirming performance thereof, which are related to recording/reproduction of CD standard information and DVD standard information, are performed and the multi-purpose optical disc device is evaluated for CD and DVD on the basis of results of the tests. It is conventional that, in evaluating the performance of the optical disc device, etc., a disc of such as glass, which has an outer configuration and a size identical to those of the CD as well as the DVD and has no side run out and/or warp, is used as an evaluation disc. In concrete, the evaluation disc is set in the optical disc device, performance of which is to be evaluated, and a test is performed for every test item by executing an evaluation program stored in the optical disc device and the recording/reproducing performance of the optical disc device are evaluated on the basis of results of the test. The test items are related mainly to performance of a pickup head of the optical disc device.

In a case where the optical disc device to be tested is a multi-purpose optical disc device, it is necessary to test the optical disc device on test items for both the CD and the DVD. On the other hand, in a case where an evaluation disc for evaluating the CD and an evaluation disc for evaluating the DVD are different, it is necessary to perform an exchange of one of the evaluation discs of CD and DVD to the other in setting it the optical disc device. Such exchange of evaluation disc requires additional labor and time for evaluation of the optical disc device.

In view of this fact, an evaluation disc capable of testing and evaluating the optical disc device for both CD and DVD was proposed in JP-A-2002-15477, which is given below. The proposed evaluation disc has an inner circular side portion in which CD standard data is written and an outer circular side portion in which DVD standard data is written.

However, since the evaluation disc proposed in JP-A-2002-15977 (cf. the preamble of claim 1) is constructed in such a way that CD standard data is written in the inner circular side thereof and DVD standard data is written in the outer circular side as mentioned above, there is a problem that a test of difference in phase between side beams, etc., can not be performed appropriately. In concrete, since a radius of a track formed in an optical disc increases with increase of distance of the track measured from a center of the optical disc and a tilt of a tangential line depends upon a radial position of the track of the optical disc, the side beam phase difference is changed depending upon the radial position of the optical disc. In the evaluation disc proposed in JP-A-2002-15477, the test for measuring the side beam phase difference in the outer circular side portion of the evaluation disc can not be performed since CD standard data is written in the inner circular side portion of the evaluation disc for CD. On the other hand, in the evaluation for DVD, the test for measuring the side beam phase difference can not be performed since the DVD standard data is written in the outer circular side portion of the evaluation disc. As a result, the measurement of side beam phase differences in the inner and outer circular side portions for CD and DVD can not be done, so that there is a problem that the test of the side beam phase difference can not be performed appropriately.

Further, no land pre-pit (LPP) is formed in an area of the conventional evaluation disc in which DVD standard data is written and, therefore, tests related to leak-in of the LPP in a reproducing signal can not be performed.

### SUMMARY OF THE INVENTION

An object of the present invention is to provide an evaluation disc for appropriately evaluating performance of an optical disc device capable of performing recording/reproducing operation for both a CD standard optical disc and a DVD standard optical disc.

This object is solved by the invention as claimed in the independent claim. Advantageous and preferred embodiments of the invention are defined by the dependent claims.

According to a first example, there is provided an evaluation disc for use in evaluating a pickup head of an optical disc device, including: an inner circular region: an intermediate circular region; and an outer circular region; wherein the outer circular region and the intermediate circular region are formed on the outer side of the inner circular region; the outer circular region is formed on the outer side of the intermediate circular region; each of the inner circular region, the intermediate circular region and the outer circular region being divided in to a CD evaluation region written with CD standard recording information and a DVD evaluation region written with DVD standard recording information.

In this construction of the evaluation disc in which the CD evaluation region having the CD standard recording information written therein and the DVD evaluation region having the DVD standard recording information written therein are formed in each of the inner circular region, the intermediate circular region and the outer circular region, it is possible to measure the side beam phase difference, etc. , in the inner, intermediate and outer circular regions for a CD and a DVD. Therefore, it is possible to measure the side beam phase difference for CD and DVD in an inner side and an outer side of the CD and the DVD to thereby appropriately evaluate characteristics of the optical disc device on the basis of results of the measurements.

According to a second example, at least one of the DVD evaluation regions includes a landpre-pit region formed with a land pre-pit.

In such construction of the evaluation disc, it is also possible to perform an evaluation related to leak-in of the land pre-pit (LPP) in a reproducing signal.

According to a third example, at least one of the DVD evaluation regions has a pit different in depth than that of the other of the DVD evaluation regions.

In such construction of the evaluation disc, it is possible, in the DVD test, to make a level of a tracking error signal obtained by the DPP (Differential Push-Pull) method sufficient, so that it is possible to appropriately perform an evaluation related to the tracking error.

Incidentally, in a general optical disc device having a recording function for DVD, the tracking error signal is generated by the DPP method.

Since, according to the present invention, the CD evaluation region in which CD standard recording information is written and the DVD evaluation region in which DVD standard recording information is written are provided in each of the inner circular region, the intermediate circular region and the outer circular region of the evaluation disc, which are divided in radial direction of the evaluation disc, it is possible to measure the side beam phase difference, etc., in the inner, intermediate and outer circular regions for a CD and a DVD. Therefore, it is possible to measure the side beam phase difference on the inner and outer circular sides for CD and DVD to thereby appropriately evaluate characteristics of the optical disc device on the basis of results of measurements.

It is also possible to perform an evaluation related to the leak-in of land pre-pit (LPP) in the reproducing signal.

### BRIEF DESCRIPTION OF THE DRAWINGS

These and other objects and advantages of this invention will become more fully apparent from the following detailed description taken with the accompanying drawings in which:
FIG. 1 schematically shows a construction of a main portion of an optical disc device the performance of which is to be evaluated;
FIG. 2 shows an evaluation disc according to an embodiment of the present invention; and
FIG. 3 is a flowchart showing an evaluation processing in the optical disc device.

### DETAILED DESCRIPTION OF THE PREFERRED EMBODIMENTS

An embodiment of the evaluation disc according to the present invention will be described below.

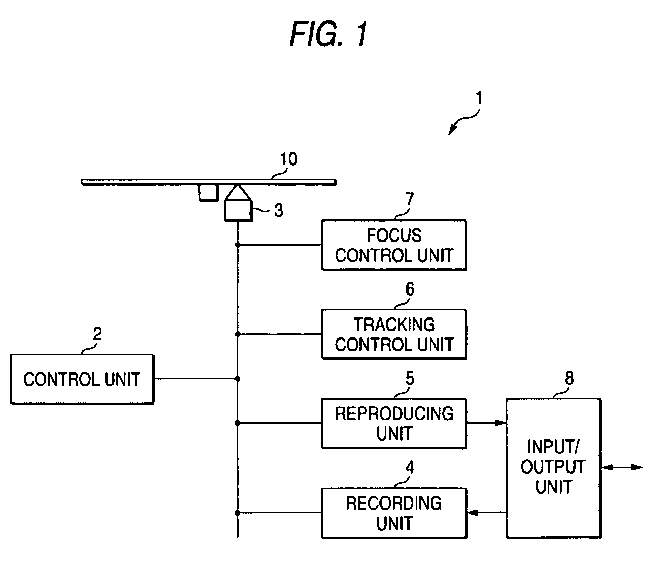

An optical disc device whose characteristics are to be evaluated by using the evaluation disc according to the present invention will be briefly described first. FIG.1 shows a construction of a main portion of the optical disc device schematically. The optical disc device 1 is a multi-purpose optical disc device, which can perform recording/reproducing for two kinds of optical disc, a CD and a DVD. The multi-purpose optical disc device 1 includes a control unit 2 for controlling an operation of the body of the device, a pickup head 3 for irradiating an optical disc 10 (either CD or DVD) set in the device 1 with laser light during data recording and reproducing operations, a recording unit 4 for controlling, during the data recording operation, the laser light irradiation on the basis of the data to be recorded in the optical disc 10, a reproducing unit 5 for generating, during the reproducing operation, a reproducting signal by processing an RF signal from the pickup head 3, a tracking control unit 6 for performing a tracking servo control on the basis of a tracking error signal (TE signal) obtainable from the pickup head 3, a focus control unit 7 for performing a focus servo control on the basis of a focus error signal (FE signal) obtainable from the pickup head 3 and an input/output unit 8 for receiving data to be recorded in the optical disc 10 and outputting a reproducing signal obtained by reproducing the data recorded in the optical disc 10.

The pickup head 3 includes a first light source for generating laser light (wavelength being 780 nm) for irradiating a CD, a first light receiving element for detecting reflection light from the CD, a second light source for generating laser light (wavelength being 650 nm) for irradiating a DVD, a second light receiving element for detecting reflection light from the DVD, an objective lens for condensing laser light to be irradiated to the optical disc and a two-axle actuator for moving the objective lens in radial directions of the optical disc 10, and to or away from the optical disc 10 etc. Further, the pickup head 3 is mounted on the device movably in the radial direction of the optical disc 10 by a thread motor, which is not shown.

Incidentally, the first and second light receiving elements may be constructed integrally.

The recording unit 4 performs an encoding of the data, which is inputted to the input/output unit 8 and is to be recorded in the optical disc 10, and a power control of the laser light to be irradiated to the optical disc 10 from the pickup head 3, on the basis of the data encoded, etc. The reproducing unit 5 obtains the data recorded in the optical disc 10 from the RF signal obtained from the pickup head 3 and generates the reproducing signal obtained by decoding the data, etc. The reproducing signal generated by the reproducing unit 5 is externally outputted through the input/output unit 8. The tracking control unit 6 performs the servo control (tracking control) for adjusting an irradiating position of laser light to the track of the optical disc 10 by moving the pickup head 3 and the objective lens provided in the pickup head 3 in the radial direction of the optical disc 10 on the basis of the TE signal from the pickup head 3. The optical disc device 1 performs the tracking control by using the DPP method. The focus control unit 7 performs the servo control (focus control) for adjusting a condensing position of the laser light to a data recording plane of the optical disc 10 by moving the objective lens provided in the pickup head 3 forward and backward with respect to the optical disc 10 on the basis of the TE signal from the pickup head 3.

Further, the control unit 2 stores an evaluation program for performing the test of every test item by using the evaluation disc according to the embodiment of the present invention and executing the evaluation processing for every test item on the basis of result of the tests. The evaluation program evaluates the performance of the pickup head 3 by mainly measuring the test items related to the performance of the pickup head 3.

Incidentally, since the recording processing related to the data recording to the optical disc 10 and the reproduction processing for reproducing the data recorded in the optical disc 10 in the optical disc device 1 are the same as those in any known device, detailed description thereof is omitted.

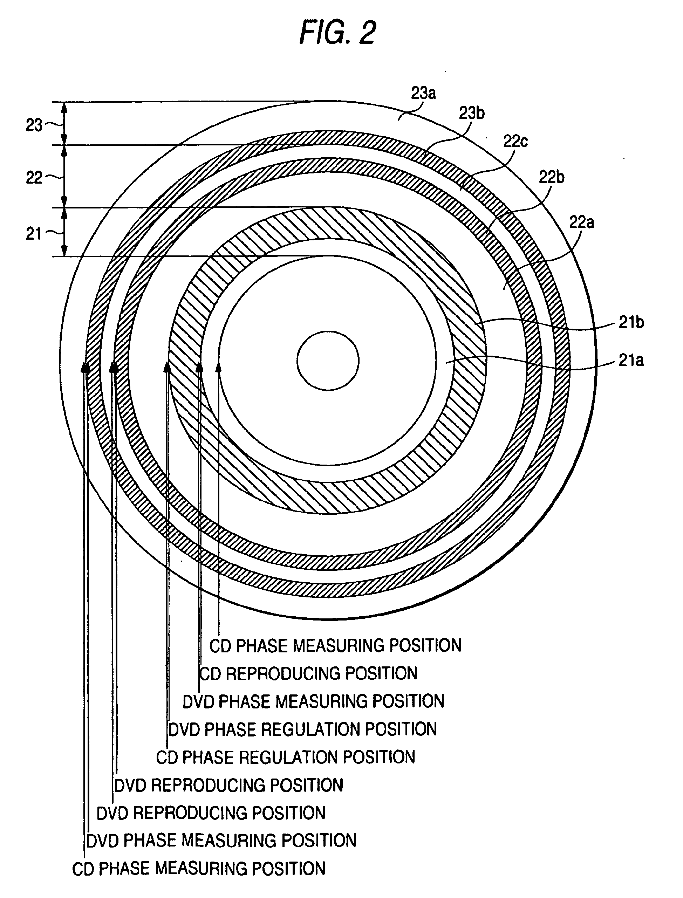

FIG. 2 shows an evaluation disc 20 according to an embodiment of the present invention. The evaluation disc 20 has an outer configuration identical to a CD as well as a DVD, whose diameter and thickness are 12 cm and 1.2 mm, respectively. The evaluation disc 20 is made of glass or polycarbonate. As shown in FIG. 2, the evaluation disc is divided in radial direction in to an inner circular region 21, an intermediate circular region 22 and an outer circular region 23. The area of the inner circular region 21 is defined in a range from 25 mm to 36 mm measured from a center of the evaluation disc 20. The area of the intermediate circular region 22 is defined in a range from 36 mm to 50 mm measured from the center of the evaluation disc 20 and the area of the outer circular region 23 is defined in a range from 50 mm to 60 mm measured from the center of the evaluation disc 20. The inner circular region 21 is divided in radial direction of the disc in to an inner CD evaluation region 21a recorded with CD standard information and an inner DVD evaluation region 21b recorded with DVD standard information. The inner CD evaluation region 21a is defined in a range from 25 mm to 29.3 mm measured from the center of the evaluation disc 20 and the inner DVD evaluation region 21b is defined in a range from 29.3 mm to 36 mm measured from the center of the evaluation disc 20. In the inner CD evaluation region 21a, the CD standard recording information is written and the depth of the pit is λ/4. In the inner DVD evaluation region 21b, the DVD standard recording information is written and the depth of the pit is λ/8.

Further, the intermediate circular region 22 is divided in to an intermediate CD evaluation region 22a written with the CD standard recording information, a first intermediate DVD evaluation region 22b written with the DVD standard recording information and a second intermediate DVD evaluation region 22c written with the DVD standard recording information. In the intermediate CD evaluation region 22a, the CD standard recording information is formed and depth of the pit therein is λ/4. In the first intermediate DVD evaluation region 22b, the DVD standard recording information is formed and depth of the pit therein is λ/4. Further, in the second intermediate DVD evaluation region 22c, the DVD standard recording information and the land pre-pits are formed. The pit depth of the recording information and the land pre-pit is λ/4, respectively.

Further, the outer circular region 23 is divided in to an outer DVD evaluation region 23b written with DVD standard recording information and an outer CD evaluation region 23a written with CD standard recording information. The outer DVD evaluation region 23b is defined in an area ranging from 50 mm to 53.7 mm measured from the center of the evaluation disc 20 and the outer CD evaluation region 23a is defined in an area ranging from 53.7 mm to 60 mm measured from the center of the evaluation disc 20. In the outer CD evaluation region 23a, the CD standard recording information is formed and the depth of the pit therein is λ/4. In the outer DVD evaluation region 23b, the DVD standard recording information is formed and the depth of the pit is λ/8.

The test disc 20 is fabricated by forming, for example, the following members and laminating them with centers thereof being unified.
A. a member having an inner radius of 7.5 mm and an outer radius of 29.3 mm, in which the inner CD evaluation region 21a is formed,
B. a member having an inner radius of 29.3 mm and an outer radius of 36 mm, in which the inner DVD evaluation region 21b is formed,
C. a member having an inner radius of 36 mm and an outer radius of 43 mm, in which the intermediate CD evaluation region 22a is formed,
D. a member having an inner radius of 43 mm and an outer radius of 47 mm, in which the first intermediate DVD evaluation region 22b is formed,
E. a member having an inner radius of 47 mm and an outer radius of 50 mm, in which the second intermediate DVD evaluation region 22c is formed,
F. a member having an inner radius of 50 mm and an outer radius of 53 mm, in which the outer DVD evaluation region 23b is formed, and
G. a member having an inner radius of 53 mm and an outer radius of 60 mm, in which the outer CD evaluation region 23a is formed.

The members D and E may be formed integrally.

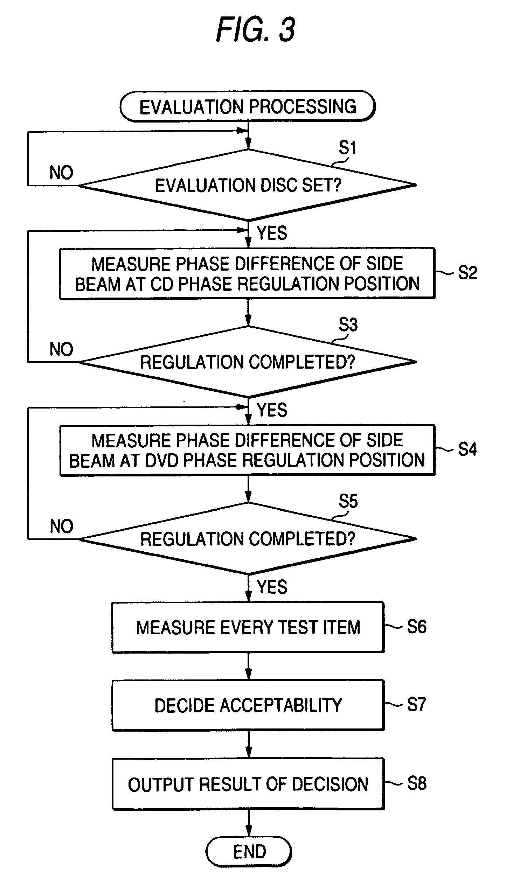

An evaluation operation for evaluating the performance of the optical disc device 1 with using the evaluation disc 20 according to this embodiment will be described. FIG. 3 is a flowchart showing an evaluation processing for the optical disc device to be evaluated. In the optical disc device 1 to be evaluated, the evaluation program stored in the control unit 2 is executed. Upon the execution of the evaluation program, the optical disc device 1 starts the evaluation processing shown in FIG. 3.

The optical disc device 1 waits for an insertion of the evaluation disc 20 into a body thereof (s1) and, when the evaluation disc 20 is inserted, the phase difference of side beams is measured by irradiating a certain position (CD phase regulation position) of the evaluation disc 20, which is 36.5 mm measured from the center of the evaluation disc 20, with laser light emitted from the first CD light source provided in the pickup head 3 (s2). In this case, an operator regulates the mounting position of the optical parts provided in the pickup head 3 in such a way that a side beam phase difference for CD is minimized. When the regulation related to the side beam phase difference for CD is completed by, for example, inputting information of the completion of the regulation related to the side beam phase difference for CD to the optical disc device (s3), the optical disc device 1 measures the side beam phase difference by irradiating a position (DVD phase regulation position) of the evaluation disc 20, which is at a distance of 35.5 mm measured from the center of the evaluation disc 20, with laser light emitted from the first DVD light source provided in the pickup head 3 (s4). In this case, the operator regulates the mounting position of the optical parts provided in the pickup head 3 in such a way that the side beam phase difference is minimized. When the optical disc device 1 completes the regulation related to the side beam phase difference for DVD by, for example, inputting an information of the completion of the regulation related to phase difference for DVD to the optical disc device 1 by the operator (s5), the optical disc device 1 performs measurements for respective test items 1 to 7 to be described later (s6).

The CD phase regulation position and the DVD phase regulation position are the positions where it is experimentally confirmed that an amount of deviation (absolute value) between the phase difference in the innermost circle of the optical disc 20 and the phase difference in the outermost circle of the optical disc 10 is minimized. The CD phase regulation position is located in the inner CD evaluation region 22a and the DVD phase regulation position is located in the inner DVD evaluation region 21b. Further, since the depth of the DVD standard recording information pit in the inner DVD evaluation region 21b is λ/8, it is possible to obtain the TE signal of sufficient level by DPP method. Therefore, it is possible to appropriately perform the regulation related to side beam phase difference for DVD.

In the step s6, the optical disc device 1 performs the following measurements:
1- measurement of the side beam phase difference on the inner circle side for CD by irradiating the position (inner CD evaluation region 21a) of the optical disc, which is 25 mm measured from the center of the evaluation disc 20, with laser beam from the first CD light source provided in the pickup head 3.
2- measurement of level of the reproducing signal (RF signal) for CD by irradiating the position (inner CD evaluation region 21a) of the optical disc, which is 29 mm measured from the center of the evaluation disc 20, with laser beam from the first CD light source provided in the pickup head 3.
3- measurement of the side beam phase difference on the inner circle side for DVD by irradiating the position (inner DVD evaluation region 21b) of the optical disc, which is 29.3 mm measured from the center of the evaluation disc 20, with laser beam from the first DVD light source provided in the pickup head 3.
4- measurement of level of the reproducing signal (RF signal) for DVD by irradiating the position (first intermediate DVD evaluation region 22c) of the optical disc, which is 45 mm measured from the center of the evaluation 20, with laser beam from the first DVD light source provided in the pickup head 3.
5- measurement of level of the reproducing signal (RF signal) for DVD by irradiating the position (second intermediate DVD evaluation region 22c) of the optical disc, which is 48 mm measured from the center of the evaluation disc 20, with laser beam from the first DVD light source provided in the pickup head 3.
6- measurement of the side beam phase difference on the outer circle side for DVD by irradiating the position (outer DVD evaluation region 23b) of the optical disc, which is 53.5 mm measured from the center of the evaluation 20, with laser beam from the first DVD light source provided in the pickup head 3.
7- measurement of the side beam phase difference on the outer circle side for CD by irradiating the position (outer CD evaluation region 23a) of the optical disc, which is 54 mm measured from the center of the evaluation disc 20, with laser beam from the first CD light source provided in the pickup head 3.

When the measurements for all test items in the step s6 are completed, it is determined according to the results of the tests whether or not the performance of the optical disc device 1 is acceptable (s7). By outputting the determination of the performance of the device 1 (s8), the evaluation processing is ended.

The good or bad of the performance of the device 1 is determined totally on the basis of:
a. in the Step 7, whether or not the amount of deviation between the side beam phase difference on the inner circle side and the side beam phase difference on the outer circle side, which are measured for CD in the step s6, is within a predetermined range,
b. whether or not the amount of deviation between the side beam phase difference on the inner circle side and the side beam phase difference on the outer circle side, which are measured for DVD in the step s6, is within a predetermined range,
c. whether or not the level of the reproducing signal (RF signal) for CD is within a predetermined range, and
d. whether or not the level of the reproducing signal (RF signal) for DVD is within a predetermined range and whether or not the leak-in of LPP is within a predetermined range.

Incidentally, the leak-in of LPP is obtained from a difference in level between DVD reproducing signals (RF signals) measured at the position (first inner DVD evaluation region 22b), which is 45 mm measured from the center of the evaluation disc 20, and at the position (second inner DVD evaluation region 22c) , which is 48 mm measured from the center of the evaluation disc 20.

Further, since the depth of the pit for DVD recording information, which is formed in the inner DVD evaluation region 21b and the outer DVD evaluation region 23b, is λ/8 and the TE signal having sufficient level can be obtained by the DPP method, it is possible to measure the side beam phase difference precisely.

As descried, since the evaluation disc 20 according to this embodiment includes the CD evaluation regions 21a, 22a and 23a in which the CD standard recording information are formed and the DVD evaluation regions 21b, 22b and 23b in which the DVD standard recording information are formed in the inner circular region 21, the intermediate circular region 22 and the outer circular region 23, respectively, it is possible to measure the side beam phase differences for CD and DVD on the inner, intermediate and outer circular sides there of. Therefore, it is possible to make the optical disc device 1, which is capable of performing the recording/reproducing operation for both optical CD and DVD, to appropriately measure the test items for CD and DVD to thereby perform the evaluation of performance of the optical disc device 1 on the basis of the test results. In addition, it is possible to perform the evaluation related to the leak-in of the land pre-pit (LPP) in the reproducing signal.

Incidentally, in addition to the test items to be measured by using the evaluation disc 20, other test items may be added.

## Claims

1. An evaluation disc for use in evaluating a pickup head (3) of an optical disc device (1), comprising:
an inner circular region (21); and
an outer circular region (23);
**characterized in that**
the evaluation disc (20) further comprises:
an intermediate circular region (22); wherein
the outer circular region (23) and the intermediate circular region (22) are formed on the outer side of the inner circular region (21);
the outer circular region (23) is formed on the outer side of the intermediate circular region (22); and
each of the inner circular region (21), the intermediate circular region (22) and the outer circular region (23) includes a CD evaluation region (21a, 22a, 23a) written with CD standard recording information and a DVD evaluation region (21 b, 22b, 22c, 23b) written with DVD standard recording information.

2. The evaluation disc according to claim 1, wherein
at least one of the DVD evaluation regions (21 b, 22b, 22c, 23b) includes a land pre-pit region (22c) formed with a land pre-pit.

3. The evaluation disc according to claim 1 or 2, wherein
at least one of the DVD evaluation regions (21 b, 22b, 23b) has a pit different in depth than that of the other of the DVD evaluation regions (21b, 22b, 22c, 23b).

4. The evaluation disc according to any one of claims 1 to 3, further comprising:
a CD phase regulation position; and
a DVD phase regulation position.

5. The evaluation disc according to claim 4, wherein
the CD phase regulation position is located in the inner CD evaluation region (22a), and the DVD phase regulation position is located in the inner DVD evaluation region (21 b).

6. A method for evaluating a pickup head (3) of an optical disk device (1) using the evaluation disc (20) according to any one of claims 1 to 5, the method comprising the steps of:
performing a measurement of each test item by irradiating each of the CD evaluation regions (21 a, 22a, 23a) and each of the DVD evaluation regions (21 b, 22b, 22c, 23b) comprised in the evaluation disk (20) (S6);
determining according to the results of the measurement of each test item whether or not the performance of the optical disc device (1) is acceptable (S7); and
outputting the determination of the performance of the optical device (1) (S8).

7. The method according to claim 6, wherein before the step of performing a measurement of each test item (S6), the method comprises the steps of:
waiting for an insertion of the evaluation disc (20) in the optical device (1) (S1);
performing a measurement of a side beam phase difference for CD by irradiating a CD phase regulation position of the evaluation disk (20) (S2) when the evaluation disc (20) is inserted;
performing a measurement of a side beam phase difference for DVD by irradiating a DVD phase regulation position of the evaluation disk (20) (S4) when information of completion of regulation of the phase difference side beam for CD is inputted (S3); and
performing the step of measurement of each test item (S6) when information of completion of regulation of the phase difference side beam for DVD is inputted (S5).

8. The method according to claim 6 or 7, wherein the step of performing a measurement of each test item (S6) comprises:
measuring a side beam phase difference on the inner circle side for CD by irradiating the inner CD evaluation region (21 a);
measuring a level of a reproducing signal for CD by irradiating the inner CD evaluation region (21 a);
measuring a side beam phase difference on the inner circle side for DVD by irradiating the inner DVD evaluation region (21 b);
measuring a level of a reproducing signal for DVD by irradiating the intermediate DVD evaluation region (22b, 22c);
measuring a side beam phase difference on the outer circle side for DVD by irradiating the outer DVD evaluation region (23b); and
measuring a side beam phase difference on the outer circle side for CD by irradiating the outer CD evaluation region (23a).

9. An evaluation program for performing an evaluation processing of a pickup head (3) of an optical disk device (1) using the method according to any one of claims 6 to 8.

## Patentansprüche

1. Bewertungsplatte zur Verwendung bei der Bewertung eines Aufnehmerkopfes (3) einer Vorrichtung (1) für optische Platten, umfassend:
einen inneren Kreisbereich (21); und
einen äußeren Kreisbereich (23);
**dadurch gekennzeichnet, dass**
die Bewertungsplatte (20) des Weiteren umfasst:
einen zwischenliegenden Kreisbereich (22), wobei
der äußere Kreisbereich (23) und der zwischenliegende Kreisbereich (22) an der Außenseite des inneren Kreisbereiches (21) ausgebildet sind;
der äußere Kreisbereich (23) an der Außenseite des zwischenliegenden Kreisbereiches (22) ausgebildet ist, und
jeder von dem inneren Kreisbereich (21), dem zwischenliegenden Kreisbereich (22) und dem äußeren Kreisbereich (23) einen CD-Bewertungsbereich (21 a, 22a, 23a), der mit CD-Standard-Aufzeichnungsinformation beschrieben ist, und einen DVD-Bewertungsbereich (21 b, 22b, 22c, 23b), der mit DVD-Standard-Aufzeichnungsinformation beschrieben ist, beinhaltet.

2. Bewertungsplatte nach Anspruch 1, wobei
wenigstens einer von den DVD-Bewertungsbereichen (21b, 22b, 22c, 23b) einen Erhebung-Vorvertiefungsbereich (22c) aufweist, der mit einer Erhebung- Vorvertiefung (land pre-pit) ausgebildet ist.

3. Bewertungsplatte nach Anspruch 1 oder 2, wobei
wenigstens einer von den DVD-Bewertungsbereichen (21 b, 22b, 23b) eine Vertiefung aufweist, deren Tiefe von derjenigen der anderen DVD-Bewertungsbereiche (21 b, 22b, 22c, 23b) verschieden ist.

4. Bewertungsplatte nach einem der Ansprüche 1 bis 3, des Weiteren umfassend:
eine CD-Phasen-Regulierposition; und
eine DVD-Phasen-Regulierposition.

5. Bewertungsplatte nach Anspruch 4, wobei
die CD-Phasen-Regulierposition in dem inneren CD-Bewertungsbereich (22a) befindlich ist und die DVD-Phasen-Regulierposition in dem inneren DVD-Bewertungsbereich (21 b) befindlich ist.

6. Verfahren zum Bewerten eines Aufnehmerkopfes (3) einer Vorrichtung (1) für optische Platten unter Verwendung der Bewertungsplatte (20) nach einem der Ansprüche 1 bis 5, wobei das Verfahren die nachfolgenden Schritte umfasst:
Durchführen einer Messung an jedem Testobjekt durch Bestrahlen von jedem der CD-Bewertungsbereiche (21a, 22a, 23a) und von jedem der DVD-Bewertungsbereiche (21 b, 22b, 22c, 23b), die in der Bewertungsplatte (20) enthalten sind (S6);
entsprechend den Ergebnissen der Messung an jedem Testobjekt erfolgendes Bestimmen, ob das Leistungsvermögen der Vorrichtung (1) für optische Platten annehmbar ist (S7); und
Ausgeben der Bestimmung des Leistungsvermögens der optischen Vorrichtung (1) (S8).

7. Verfahren nach Anspruch 6, wobei vor dem Schritt des Durchführens einer Messung an jedem Testobjekt (S6) das Verfahren die nachfolgenden Schritte umfasst:
Warten auf das Einschieben der Bewertungsplatte (20) in die optische Vorrichtung (1) (S1);
Durchführen einer Messung einer Seitenstrahlphasendifferenz für CD durch Bestrahlen eines CD-Phasen-Regulierposition der Bewertungsplatte (20) (S2), wenn die Bewertungsplatte (20) eingeschoben ist;
Durchführen einer Messung einer Seitenstrahlphasendifferenz für DVD durch Bestrahlen einer DVD-Phasen-Regulierposition der Bewertungsplatte (20) (S4), wenn Information hinsichtlich der Beendigung der Regulierung des Phasendifferenzseitenstrahles für CD eingegeben wird (S3); und
Durchführen des Schrittes der Messung an jedem Testobjekt (S6), wenn Information hinsichtlich der Beendigung der Regulierung des Phasendifferenzseitenstrahles für DVD eingegeben wird (S5).

8. Verfahren nach Anspruch 6 oder 7, wobei der Schritt des Durchführens einer Messung an jedem Testobjekt (S6) umfasst:
Messen einer Seitenstrahlphasendifferenz an der inneren Kreisseite für CD durch Bestrahlen des inneren CD-Bewertungsbereiches (21 a);
Messen eines Pegels eines Wiedergabesignals für CD durch Bestrahlen des inneren CD-Bewertungsbereiches (21 a);
Messen einer Seitenstrahlphasendifferenz an der inneren Kreisseite für DVD durch Bestrahlen des inneren DVD-Bewertungsbereiches (21 b);
Messen eines Pegels eines Wiedergabesignals für DVD durch Bestrahlen des zwischenliegenden DVD-Bewertungsbereiches (22b, 22c);
Messen einer Seitenstrahlphasendifferenz an der äußeren Kreisseite für DVD durch Bestrahlen des äußeren DVD-Bewertungsbereiches (23b); und
Messen einer Seitenstrahlphasendifferenz an der äußeren Kreisseite für CD durch Bestrahlen des äußeren CD-Bewertungsbereiches (23a).

9. Bewertungsprogramm zum Durchführen einer Bewertungsverarbeitung eines Aufnehmerkopfes (3) einer Vorrichtung (1) für optische Platten unter Verwendung des Verfahrens nach einem der Ansprüche 6 bis 8.

## Revendications

1. Disque d'évaluation pour une utilisation dans une évaluation d'une tête de lecture (3) d'un dispositif à disque optique (1) comprenant :
une région circulaire interne (21) ; et
une région circulaire externe (23) ;
**caractérisé en ce que**
le disque d'évaluation (20) comprend en plus :
une région circulaire intermédiaire (22) ; dans laquelle
la région circulaire externe (23) et la région circulaire intermédiaire (22) sont formées sur le côté externe de la région circulaire interne (21) ;
la région circulaire externe (23) est formée sur le côté externe de la région circulaire intermédiaire (22) ; et
chacune de la région circulaire interne (21), la région circulaire intermédiaire (22) et la région circulaire externe (23) comprend une région d'évaluation CD (21a, 22a, 23a) écrite avec une information d'enregistrement standard CD et une région d'évaluation DVD (21b, 22b, 22c, 23b) écrite avec une information d'enregistrement standard DVD.

2. Disque d'évaluation selon la revendication 1, dans lequel
au moins une des régions d'évaluation DVD (21b, 22b, 22c, 23b) comprend une région de plat avant-cuvette (22c) formée avec un plat avant-cuvette (land pre-pit).

3. Disque d'évaluation selon la revendication 1 ou 2, dans lequel
au moins une des régions d'évaluation DVD (21b, 22b, 23b) présente une cuvette (pit) différente en profondeur de celle de l'autre des régions d'évaluation DVD (21b, 22b, 22c, 23b).

4. Disque d'évaluation selon l'une quelconque des revendications 1 à 3 comprenant de plus :
une position de régulation de phase CD ; et
une position de régulation de phase DVD.

5. Disque d'évaluation selon la revendication 4, dans lequel
la position de régulation de phase CD est disposée dans la région d'évaluation CD interne (22a) et la position de régulation de phase DVD est disposée dans la région d'évaluation DVD interne (21b).

6. Procédé pour l'évaluation d'une tête de lecture (3) d'un dispositif à disque optique (1) en utilisant le disque d'évaluation (20) selon l'une quelconque des revendications 1 à 5, le procédé comprenant les étapes consistant :
à réaliser une mesure de chaque article de test en irradiant chacune des régions d'évaluation CD (21a, 22a, 23a) et chacune des régions d'évaluation DVD (21b, 22b, 22c, 23b) comprises dans le disque d'évaluation (20) (S6) ;
à déterminer selon les résultats de la mesure de chaque article de test si la performance du dispositif à disque optique (1) est acceptable ou non (S7) ; et
à fournir la détermination de la performance du dispositif optique (1) (S8).

7. Procédé selon la revendication 6, dans lequel le procédé comprend avant l'étape de réalisation d'une mesure de chaque article de test (S6) les étapes consistant :
à attendre une insertion du disque d'évaluation (20) dans le dispositif optique (1) (S1) ;
à réaliser une mesure d'une différence de phase de faisceau latéral pour CD en irradiant une position de régulation de phase CD du disque d'évaluation (20) (S2) lorsque le disque d'évaluation (20) est inséré ;
à réaliser une mesure d'une différence de phase de faisceau latéral pour DVD en irradiant une position de régulation de phase DVD du disque d'évaluation (20) (S4) lorsque l'information d'achèvement de la régulation du faisceau latéral de différence de phase pour CD est introduite (S3) ; et
à réaliser l'étape de mesure de chaque article de test (S6) lorsque l'information d'achèvement de la régulation du faisceau latéral de différence de phase pour DVD est introduite (S5).

8. Procédé selon la revendication 6 ou 7, dans lequel l'étape de réalisation d'une mesure de chaque article de test (S6) comprend :
la mesure d'une différence de phase de faisceau latéral sur le côté du cercle interne pour CD par irradiation de la région d'évaluation de CD interne (21a) ;
la mesure d'un niveau d'un signal de reproduction pour CD par irradiation de la région d'évaluation CD interne (21a) ;
la mesure d'une différence de phase de faisceau latéral sur le côté de cercle interne pour DVD par irradiation de la région d'évaluation de DVD interne (21b) ;
la mesure d'un niveau d'un signal de reproduction pour DVD par irradiation de la région d'évaluation de DVD intermédiaire (22b, 22c) ;
la mesure d'une différence de phase de faisceau latéral sur le côté de cercle externe pour DVD par irradiation de la région d'évaluation de DVD externe (23b) ; et
la mesure d'une différence de phase de faisceau latéral sur le côté du cercle externe pour CD par irradiation de la région d'évaluation de CD externe (23a).

9. Programme d'évaluation pour réaliser un traitement d'évaluation d'une tête de lecture (3) d'un dispositif à disque optique (1) en utilisant le procédé selon l'une quelconque des revendications 6 à 8.
